# EUROPEAN PATENT SPECIFICATION

(11) **EP 1 202 593 B1**
(45) Date of publication and mention of the grant of the patent: **08.09.2004**
(21) Application number: 01938720.8
(22) Date of filing: 18.06.2001
(51) Int. Cl.: H04Q 7/38, H04Q 7/32

(54) **COMMUNICATION TERMINAL APPARATUS AND RADIO COMMUNICATION METHOD**
KOMMUNIKATIONSENDGERÄT UND FUNKKOMMUNIKATIONSVERFAHREN
APPAREIL TERMINAL DE COMMUNICATION ET PROCEDE DE RADIOCOMMUNICATION

(30) Priority: 16.06.2000 JP 2000181037
(43) Date of publication of application: 02.05.2002
(73) Proprietor: MATSUSHITA ELECTRIC INDUSTRIAL CO., LTD., Kadoma-shi, Osaka 571-8501 (JP)
(72) Inventor: MIYA, Kazuyuki, Kawasaki-shi, Kanagawa 215-0021 (JP)
(74) Representative: Grünecker, Kinkeldey, Stockmair & Schwanhäusser Anwaltssozietät
(86) International application number: PCT/JP2001/005177
(87) International publication number: WO 2001/097552

(56) References cited:
- EP-A- 0 975 184
- EP-A- 1 009 183
- WO-A-00/35230
- JP-A- 6 303 662
- JP-A- 7 038 943
- JP-A- 8 317 452
- JP-A- 9 084 094
- JP-A- 9 191 276
- JP-A- 9 200 858
- JP-A- 9 261 761
- JP-A- 10 191 441
- JP-A- 2000 102 065
- US-A- 5 574 971
- SIEMENS: "UMTS Opening Up a World of Opportunaties" SIEMENS, 1999, pages 1-12, XP002193759 Munich, Germany

## Description

The present invention relates to a communication terminal apparatus and radio communication method used in a digital radio communication system.

Terminals connectable to both PDC and PHS systems, etc. are under development in recent years. Such a terminal specifies connection to one system with higher priority during transmission and can wait and receive signals simultaneously from both systems during reception. The connection target of this system may be sometimes limited to either system for reasons that one system is inaccessible or that one system is providing services unique to that system (e.g., 64 kbps packet), but the two systems basically never share same traffic and operate as systems independent of each other.

Furthermore, this system also has two independent telephone numbers. Moreover, there is no exchange of signals among control signals of one system with contents such as "switch to the other system" or "keep waiting to receive", etc.

EP-A-1 009 183 discloses that a communication terminal receives a control signal that is common to a first system and a second system and transmitted from the base stations of both systems. The communication terminal obtains information, including the degree of congestion in both systems, and reports this information to a first base station of the first system while also making a connection request thereto. The first base station that is requested a connection determines whether or not it is capable of accommodating the communication terminal based on the reported information, including the degree of congestion. If the accommodation seems difficult the first base station asks the base station of the second system to determine whether it is capable of the accommodation.

EP-A- 0 975 184 discloses a system in which two communication systems are in use in an area managed by one base station, and the base station determines which system a communication terminal utilizes.

US-A-5 574 971 discloses a communication system comprising large radio zones, and small radio zones, which the large radio zones are further divided into. A mobile terminal selects an optimum radio area depending on the moving speed and requests a switching of the radio channel to a mobile switching centre.

It is an object of the present invention to provide a communication terminal apparatus and radio communication method in a system capable of efficiently accommodating an optimal system according to the environment, level of congestion, or services when there are terminals applicable to a plurality of systems.

The FDD (Frequency Division Duplex) system and TDD (Time Division Duplex) system (also referred to as "TD-CDMA (Time Division - CDMA)") of W-CDMA (Wideband-Code Division Multiple Access) currently being standardized as an IMT-2000 system are under study on condition that both systems can provide basically the same services to each other and it is such a system that the FDD system or TDD system can independently provide services required for the IMT-2000. In this case, since there are no significant differences in terms of services to be provided, when a same carrier constructs both systems, the question is how efficiently the carrier can operate both systems.

Since the IMT-2000 frequency bands set by the ITU include a frequency band (2010 to 2025 MHz) where it is difficult to secure pair bands for the FDD system, construction of a system is under study which shares and complements traffic assuming that the frequency band is used for the TDD system. This seems to be able to efficiently use IMT-2000 frequency bands and operate both the FDD system and TDD system efficiently.

In view of the points described above, the present inventor has come up with the present invention by discovering that to efficiently operate both the FDD system and TDD system, it is possible to allow an optimal system to accommodate a terminal efficiently according to the environment, level of congestion or services by allowing control signals of both systems to instruct connection, transfer, handover during communication from one system to the other, standby, etc. and exchange parameter signals necessary therefor.

That is, an essence of the present invention is to switch over to an optimal system according to the environment, level of congestion, or services as appropriate by allowing control signals of both systems in a plurality of systems with different radio transmission systems to instruct connection, transfer, handover during communication from one system to another, standby, etc. and exchange parameter signals necessary therefor. In this case, a telephone number is basically common (number as a terminal or user ID) and is not a system-specific telephone number, that is, the telephone number for FDD is not different from that for TDD.

Therefore, when, for example, a same operator operates FDD/TDD modes in a CDMA and there are terminals applicable to a dual mode, the present invention relates to a system that switches over to an optimal system according to the environment, level of congestion, or services and accommodates terminals efficiently.
FIG.1 illustrates an overlay structure in a radio communication system according to Embodiment 1 of the present invention; .
FIG.2 illustrates an outlined configuration in the radio communication system according to Embodiment 1 of the present invention;
FIG.3 is a block diagram showing a configuration of a communication terminal apparatus in the radio communication system according to Embodiment 1 of the present invention;
FIG.4 is a block diagram showing a configuration of a base station apparatus in the radio communication system according to Embodiment 1 of the present invention;
FIG.5 illustrates another example of an outlined configuration in the radio communication system according to Embodiment 1 of the present invention; and
FIG.6 is block diagram showing a configuration of a communication terminal apparatus in a radio communication system according to Embodiment 2 of the present invention.

With reference now to the attached drawings, embodiments of the present invention will be explained in detail below.

### (Embodiment 1)

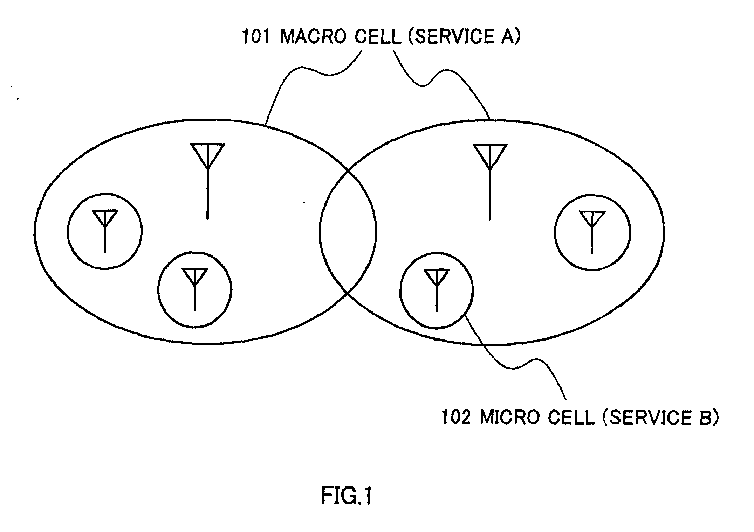

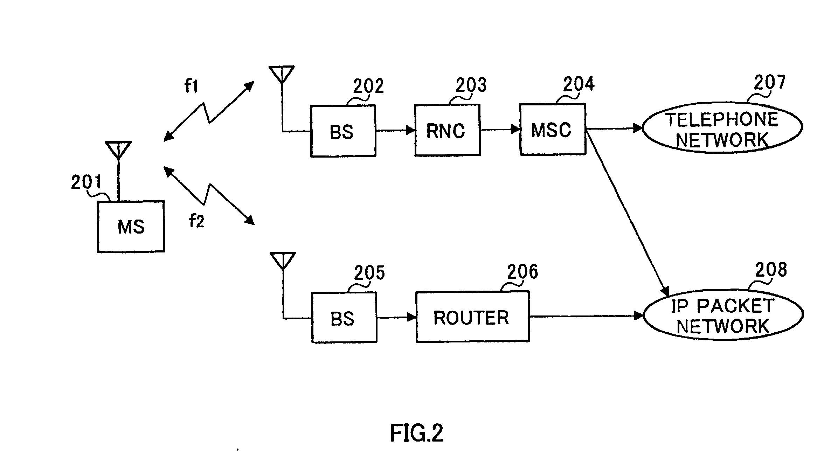

FIG.1 illustrates an overlay structure in a radio communication system according to Embodiment 1 of the present invention and FIG.2 illustrates an outlined configuration in the radio communication system according to Embodiment 1 of the present invention.

In the overlay structure shown in FIG.1, macro cell 101 that covers a relatively wide area overlaps with micro cell 102 that covers a relatively narrow area. For simplicity of explanations, the cases where macro cell 101 accommodates a CDMA-FDD system and micro cell 102 accommodates a CDMA-TDD system will be explained.

Here, the number of overlapping cells with an overlay structure is not limited to two, and the same concept is applicable to a system with three or more overlapping cells. Moreover, this embodiment is applicable not only to a system with two different radio transmission systems but also to a system with three or more different transmission systems as well.

In the radio communication system shown in FIG.2, a speech signal with frequency f1 sent from mobile station (MS) 201 which is a communication terminal is received by base station (BS) 202 and the received data obtained through predetermined processing is sent to mobile switching center (hereinafter abbreviated as "MSC") 204 via radio network controller (hereinafter abbreviated as "RNC") 203. MSC 204 combines data from a number of base stations and sends the combined data to telephone network 207. Furthermore, MSC 204 is also connected to IP packet network 208 where an IP packet signal is generally sent if necessary using a tunneling technology, which will be described later. By the way, suppose telephone network 207 includes PSTN and ISDN, etc.

On the other hand, a high-speed packet with frequency f2 sent from mobile station (MS) 201 is received by base station (BS) 205, the received data obtained through predetermined processing is routed by router 206 and sent to IP (Internet protocol) packet network 208.

Thus, one system is connected to a telephone network from RNC 203 via MSC 204 and the other system is connected to IP packet network 208 via router 206 having a control function such as radio resource control, etc. Connecting to the IP packet network via a router eliminates the need to go through an exchange makes it possible to reduce costs related to construction and control of an infrastructure and thereby reduce communication fees.

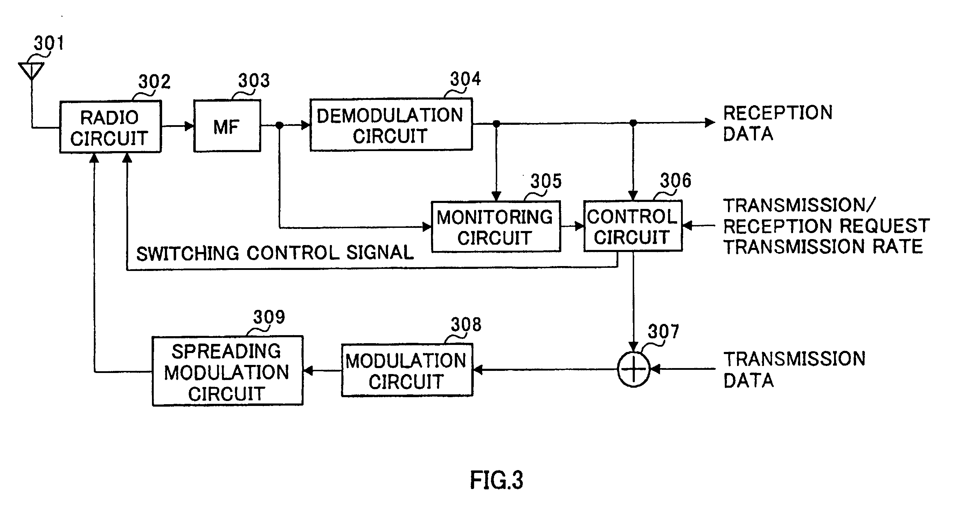

FIG.3 is a block diagram showing a configuration of a mobile station in the radio communication system according to Embodiment 1 of the present invention. This mobile station selects a system in an area (micro cell) where the FDD system overlaps with the TDD system according to the environment, level of congestion or services . The mobile station can communicate with a plurality of systems (base stations) and is provided with a plurality of reception systems, but to simplify explanations FIG.3 shows only one system.

A signal received via antenna 301 is subjected to predetermined radio reception processing (down-conversion, A/D conversion, etc.) by radio circuit 302. The signal subjected to radio reception processing is sent to matched filter 303 and matched filter 303 performs despreading processing using a spreading code used at the base station. In this way, a signal sent to the own station is extracted from the received signal.

The despread signal is sent to demodulation circuit 304, subjected to demodulation processing and becomes reception data. Furthermore, the despread signal and/or demodulated signal are sent to monitoring circuit 305.

Monitoring circuit 305 recognizes what kinds of services base station 202 and base station 205 provide from control signals from base station 202 and base station 205 and outputs the control signals to control circuit 306. Furthermore, monitoring circuit 305 measures the reception quality and moving speed using the signals from the base stations, estimates the situations of propagation paths from the base stations and recognizes the level of the moving speed of the own station. Monitoring circuit 305 outputs the propagation path estimation result and information of the moving speed as a control signal to control circuit 306.

Control circuit 306 outputs (connection request) control data indicating to which system the mobile station should be connected to adder 307 according to the control signal from monitoring circuit 305, a transmission/reception request and transmission rate information and at the same time outputs a switching control signal instructing switchover to the frequency of the system corresponding to the service to be connected to radio circuit 302. Adder 307 multiplexes the transmission data with control data for connection with the above-described system and outputs to modulation circuit 308. Modulation circuit 308 applies digital-modulation to the multiplexed transmission data and control data and outputs to spreading modulation circuit 309. Spreading modulation circuit 309 performs spreading modulation processing on the multiplexed transmission data and control data using a predetermined spreading code and outputs the signal subjected to the spreading/modulation to radio circuit 302.

Radio circuit 302 carries out predetermined radio transmission processing (D/A conversion, up-conversion, etc.) on the transmission data and control data. Furthermore, radio circuit 302 receives a switching control signal instructing switchover to the frequency of the system to be connected from control circuit 306, and therefore radio circuit 302 switches the frequency according to the switching control signal. The transmission data after the radio transmission processing is sent to the base station via antenna 301.

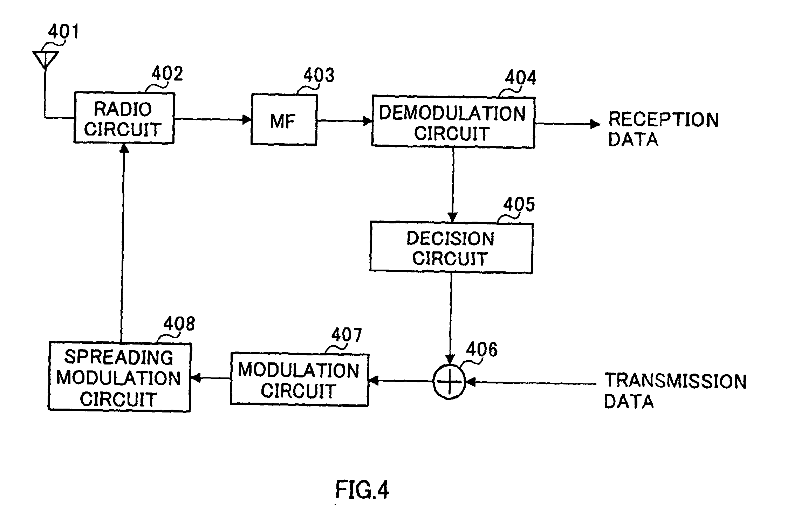

FIG.4 is a block diagram showing a configuration of the base station apparatus in the radio communication system according to Embodiment 1 of the present invention.

First, the mobile station sends a control signal ( connection request information) indicating a connection request based on each service, communication environment and measurement of the moving speed, etc. and the aforementioned measurement results.

A signal including these control signal and measurement results is received via antenna 401 and subjected to predetermined radio reception processing (down-conversion, A/D conversion, etc.) by radio circuit 402. The signal subjected to radio reception processing is sent to matched filter 403 where the signal is subjected to despreading processing using the spreading code used at the base station. The base station thereby extracts the signal sent to the own station from the received signal.

The despread signal is sent to demodulation circuit 404 and demodulated to become reception data. The demodulated signal is sent to decision circuit 405.

Decision circuit 405 decides whether or not to connect to the mobile station based on the connection request information and measurement result information from the mobile station and the communication state information monitored by the own station as well. For example, if the communication is in a bad condition or traffic is highly congested when a connection request for high-speed packet transmission is received from the mobile station, decision circuit 405 decides that it is currently not possible to accommodate high-speed packet transmission and outputs control data indicating connection or system switchover, etc. to adder 406. On the other hand, when decision circuit 405 decides that it is currently possible to accommodate high-speed packet transmission, decision circuit 405 outputs control data indicating that connection is possible to adder 406. Here, the control data indicating connection or system switchover, etc. refers to connection or no connection, system switchover, handover during communication to another system, or standby.

Adder 406 multiplexes the transmission data with the control data for connection of the above-described system and outputs the multiplexed data to modulation circuit 407. Modulation circuit 407 applies digital modulation processing to the multiplexed transmission data and control data and outputs to spreading modulation circuit 408. Spreading modulation circuit 408 performs spreading modulation processing on the multiplexed transmission data and control data using a predetermined spreading code and outputs the signal after spreading modulation to radio circuit 402.

Radio circuit 402 performs predetermined radio transmission processing (D/A conversion, up-conversion, etc.) on the transmission data and control data. The transmission data after radio transmission processing is sent to the mobile station via antenna 401.

An operation of the radio communication system constructed of the mobile station and base station in the above configuration will be explained. Here, a case will be explained where the mobile station on standby is accommodated in macro cell (FDD system) 101 and switched to micro cell (TDD system) 102 as required.

In FIG.3, mobile station 201 receives a signal from the base station based on the FDD system and recognizes through internal monitoring circuit 305 the environment in which the base station is, the level of congestion, the moving speed, and the kind of service provided.

The mobile station 201 determines the environment or the level of congestion using, for example, the reception quality (reception SIR (Signal to Interference Ratio) etc.), determines the moving speed using, for example, a Doppler frequency and determines services using a control signal, etc. indicating the system of the base station. These determinations are made by control circuit 306 using measurement information, etc. from monitoring circuit 305.

Control circuit 306 outputs the control data indicating the environment, level of congestion decided by control circuit 306, or service connection request to adder 307 where the control data is multiplexed with the transmission data to be sent to the base station. The multiplexed control data and transmission data are subjected to digital modulation processing by modulation circuit 308 and output to spreading modulation circuit 309. Spreading modulation circuit 309 performs spreading modulation processing on the control data and transmission data and outputs to radio circuit 302. Radio circuit 302 performs predetermined radio transmission processing on the control data and transmission data. This transmission signal is sent to base station (FDD system) via antenna 301.

In FIG.4, the base station (FDD system) receives the signal sent from the mobile station, MF 403 performs despreading processing on the received signal and demodulation circuit 404 demodulates the received signal. Demodulation circuit 404 sends the information of the control data (environment, level of congestion, or service) obtained in this way to decision circuit 405. Decision circuit 405 decides the system to accommodate the mobile station according to the information on the environment, moving speed, level of congestion, or service connection request.

For example, when the base station receives a service connection request for high-speed packet transmission from the mobile station, the base station selects a TDD system which is suitable for high-speed packet transmission. When the moving speed is high (high-speed moving), the base station selects an FDD system to reduce the frequency of handover. For a service requiring real-time response (speech, etc.), when, for example, prime importance is placed on the quality of speech, the FDD system (line exchange) is selected and when it is desired to decrease communication fees, the TDD system is selected. With respect to the environment or level of congestion, the base station selects the FDD system that takes a wide coverage area to accommodate a mobile station in a favorable environment or selects the TDD system to accommodate a mobile station in a bad environment.

Thus, the base station outputs the result of the decision made by decision circuit 405 as control data to adder 406. Adder 406 multiplexes the control data with the transmission data and outputs to modulation circuit 407. Modulation circuit 407 subjects the multiplexed transmission data and control data to digital modulation processing and spreading modulation circuit 408 subjects the transmission data and control data after modulation processing and outputs to radio circuit 402.

Radio circuit 402 carries out predetermined radio transmission processing on the transmission data and control data. The transmission signal subjected to radio transmission processing is sent to the mobile station via antenna 401.

The mobile station receives the signal from the base station (FDD system), carries out despreading processing and demodulation processing on the received signal and acquires the control data indicating the system selected by the base station. This control data is sent to control circuit 306.

When the system is switched, for example, when a high-speed packet transmission service is received, control circuit 306 outputs a switching control signal to radio circuit 302 instructing switchover to the frequency of the system (TDD system) according to the control data. Radio circuit 302 switches the frequency according to the switching control signal. This allows the mobile station to communicate with a base station based on the other system (TDD system).

More specifically, the mobile station receives an instruction "normally wait under the FDD system and use a communication channel under the TDD system during connection processing of high-speed packet communication" from the base station and switches between systems according to the instruction. On the other hand, the mobile station performs communication under the FDD system during speech communication.

Furthermore, when the mobile station leaves the area covered by the TDD (micro cell) due to the movement of the mobile station, handover to the FDD systemtakes place. In this case, it is also possible to make a connection with a reduced transmission rate.

Thus, this embodiment switches over to an optimal system as appropriate according to the environment, level of congestion, or services within a plurality of systems with different radio transmission systems, and can thereby efficiently accommodate terminals in the system.

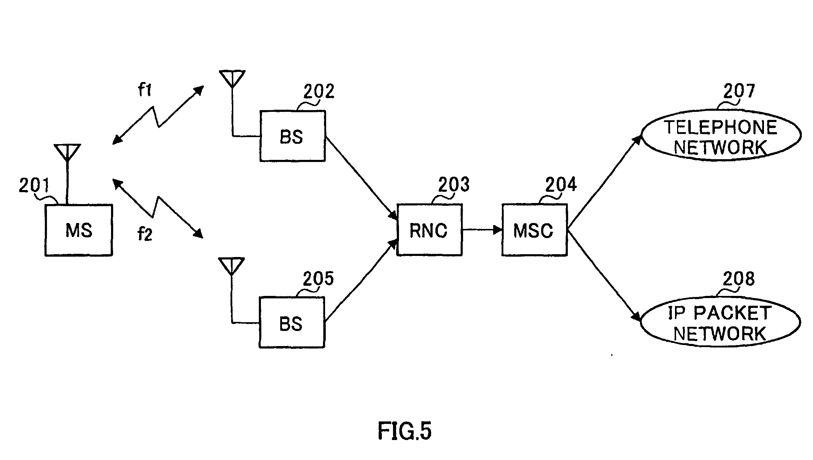

The above explanation has described the case where base station 202 (macro cell) that carries out speech services is connected to telephone network 207 via RNC 203 and MSC 204, and base station 205 (micro cell) that carries out high-speed packet transmission services is connected to IP packet network 208 via router 206. As shown in FIG.5, the present invention may also have a configuration whereby both base station 202 (macro cell) that carries out speech services and base station 205 (micro cell) that carries out high-speed packet transmission services are connected to a backbone (telephone network 207 and IP packet network 208) via common RNC 203 and MSC 204. The same effects as described above can be obtained in this case, too.

As shown in FIG.5, when an IP packet signal is sent to telephone network 207 and IP packet network 208 via RNC 203 and MSC 204, a tunneling technology is generally used. That is, instead of direct routing between BS 202 or 205 and MSC 204 by reading an IP address taking into account mobility of the IP address of the mobile terminal or mobile IP, it is possible to adopt a method of separately controlling the connection up to BTS as the mobile communication network, setting an independent path (local address, node address) as a mobile communication network and transferring a signal from IP packet network 208.

The above explanation has described the case where the base station decides whether connection is possible or not and notifies the decision result, but the present invention can also be implemented by the base station not only deciding whether connection is possible or not but also deciding (adjusting) which system should accommodate the mobile station.

In this case, as shown in FIG.5, when the system is constructed with a common control station (RNC), RNC 203 or MSC 204 decides which system should accommodate the mobile station. Furthermore, as shown in FIG.2, in the case where RNC 203 is provided independently of router 206, an apparatus is provided between RNC 203 (or MSC 204) and router 206, which decides which system should accommodate the mobile station, the apparatus decides which system should accommodate the mobile station and notifies the decision result to the mobile station.

### (Embodiment 2)

This embodiment will describe a case where the mobile station selects a system in which the own station is accommodated and notifies the situation to the base station beforehand. In this case, when the mobile station switches between systems, there are two systems for switching, a system using a switch and a systemof automatic switching according to the reception quality such as the reception level of a downlink signal.

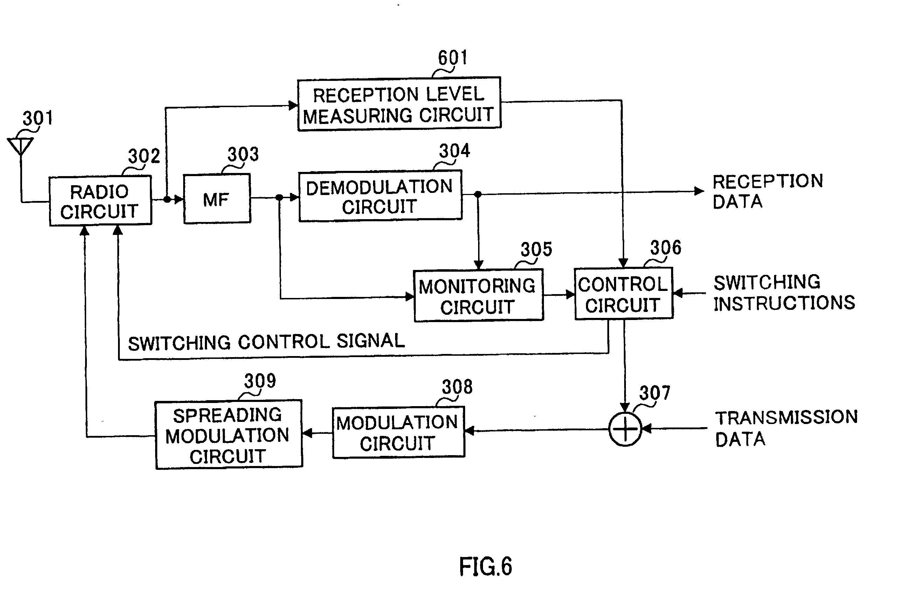

FIG.6 is block diagram showing a configuration of a mobile station in a radio communication system according to Embodiment 2 of the present invention. In FIG.6, the same components as those in FIG.3 are assigned the same reference numerals and detailed explanations thereof are omitted.

This mobile station selects a system according to the environment, level of congestion, or services in an area (micro cell) where the FDD system and TDD system overlap each other. Furthermore, the mobile station can communicate with a plurality of systems (base stations) and is provided with a plurality of reception systems, but FIG.6 only shows one system for simplicity of explanations.

The mobile station apparatus shown in FIG.6 is provided with reception level (reception quality) measuring circuit 601 that measures the reception level of a downlink signal. Reception level measuring circuit 601 measures the reception level of the received signal subjected to radio reception processing by radio circuit 302 and outputs the measurement result to control circuit 306.

Control circuit 306 selects a system to accommodate the own station based on the reception level measurement result. For example, when the mobile station is not in the area of the TDD system (area specific to the FDD system) and the reception level (e.g., the reception level of a synchronization signal and common control signal) of the TDD system is equal to or lower than a certain threshold (and the reception level of the FDD system is equal to or higher than a certain threshold), the mobile station selects an FDD system. It is also possible to set the threshold related to the TDD system and the threshold related to the FDD system separately.

Furthermore, in the case of an overlapping area, when both systems have a level equal to or higher than the threshold (generally different values), the mobile station decides that the mobile station can communicate with both systems in terms of an area. Besides, the mobile station selects a system also based on the communication environment, level of congestion, or desired communication service.

At this time, while the mobile station makes a final decision on which system should be connected, the mobile station does not decide unilaterally but selects a system according to an instruction given beforehand to a control signal (notification signal) of the downlink on which system it is desirable (or prioritized, recommended, etc.) to connect the mobile station according to the service and environment and the above-described conditions (communication environment, level of congestion, desired communication service, etc.) based thereon. In this case, since the mobile station has the right to select the system, even if the mobile station sends a connection request to the base station, if the mobile station cannot be accommodated for some reason, the mobile station receives a "connection impossible" from the base station. In that case, the mobile station selects the other system again and sends a connection request to the corresponding base station.

According to the system selected by control circuit 306, a switching control signal instructing switchover of the frequency so as to connect to the system is output to radio circuit 302. Radio circuit 302 switches the frequency according to the switching control signal.

When the mobile station switches between the systems, instead of measuring the reception level it is also possible to switch between the systems using a switch, etc. In this case, a switching signal selected by the switch is input to control circuit 306, a switching control signal is output from control circuit 306 to radio circuit 302 and radio circuit 302 switches the frequency according to the switching control signal.

Thus, this embodiment switches over to an optimal system according to the environment, level of congestion, or services as appropriate within a plurality of systems with different radio transmission systems, allowing the system to accommodate a terminal efficiently.

This embodiment describes the case where the reception level (RSSI (Received Signal Strength Indicator) of a received signal) is used as a reference for system selection, but it is also possible to use other reception qualities as the reference for system selection such as reception SIR, reception Eb/N0, reception Ec/N0 (Ec: reception energy per chip).

In this embodiment, it is also possible to give an instruction to a downlink control signal (notification signal) beforehand about the system to which the mobile station should be connected according to the service and environment (or priority thereof) and allow the mobile station to select a system based on the instruction and considering the reception situation (not only the reception quality but also moving speed, etc.) at the mobile station.

Embodiments 1 and 2 above have described the case where one system is put in a standby status, but the present invention is also applicable to a case where both systems are put in a standby status. However, from the standpoint of power consumption, it is desirable to put one system in a standby status.

Embodiments 1 and 2 above have described the case where the plurality of systems consist corresponds to a CDMA-FDD systems and a CDMA-TDD system, but the present invention is also applicable to a case where the plurality of systems corresponds to a combination of other systems, for example, HDR system and cdmaone system, or GSM system and CDMA-FDD system, etc.

The present invention is not limited to Embodiments 1 and 2, but can be implemented with various modifications.

The communication terminal apparatus of the present invention has a configuration comprising a monitoring section that monitors a downlink signal from each of a plurality of systems in a radio communication system and outputs monitoring information, and a communication connection section that connects/communicates with a base station of a system selected by the base station based on the monitoring information.

The communication terminal apparatus of the present invention configured as shown above adopts a configuration whereby the above-described monitoring information is at least one item selected from a group of services in a plurality of systems, communication environment, and moving speed of the own station.

These configurations switch over to an optimal system according to the environment, level of congestion, or services within a plurality of systems with different radio transmission systems as appropriate, and can thereby accommodate terminals in the system efficiently.

The communication terminal apparatus of the present invention adopts a configuration comprising a reception quality measuring section that measures the reception quality of a downlink signal from each of a plurality of systems in a radio communication system and a communication connection section that connects/communicates with a base station of a system selected based on the above-described reception quality.

This configuration allows the own station to select a system in which the own station is accommodated instead of the base station deciding it.

The communication terminal apparatus of the present invention configured as shown above adopts a configuration whereby a plurality of systems includes CDMA-FDD systems and CDMA-TDD systems.

The base station apparatus of the present invention adopts a configuration comprising a selection section that selects a system to accommodate the above-described communication terminal apparatus based on monitoring information from the communication terminal apparatus in the above configuration and a notification section that notifies information of the system selected by the above-described selection section to the communication terminal apparatus.

This configuration switches over to an optimal system within a plurality of systems with different radio transmission systems according to the environment, level of congestion or services, allowing the system to accommodate terminals efficiently.

The radio communication method of the present invention comprises a step of the communication terminal apparatus monitoring a downlink signal from each of a plurality of systems in a radio communication system and outputting monitoring information, a step of the base station apparatus selecting a system to accommodate the communication terminal apparatus based on the monitoring information from the communication terminal apparatus and a step of the communication terminal apparatus communicating/connecting with the base station of the system selected by the above-described base station.

This method switches over to an optimal system within a plurality of systems with different radio transmission systems according to the environment, level of congestion or services as appropriate, allowing the system to accommodate terminals efficiently.

The radio communication method of the present invention comprises a step of measuring reception quality of a downlink signal from each of a plurality of systems in a radio communication system and a step of communicating/connecting with the base station of the system selected based on the reception quality.

This method allows the own station to select the system in which the own station is accommodated instead of the base station deciding it.

In the radio communication method of the present invention described above, a plurality of systems includes CDMA-FDD systems and CDMA-TDD systems.

According to the present invention as described above, in a radio communication system provided with a plurality of systems including CDMA-FDD systems and CDMA-TDD systems, the communication terminal apparatus monitors a downlink signal from each system, outputs monitoring information, the base station apparatus selects a system to accommodate the communication terminal apparatus based on the monitoring information from the communication terminal apparatus and the communication terminal apparatus communicates/connects with the base station of the system selected by the above-described base station, thereby switching over to an optimal system within a plurality of systems with different radio transmission systems according to the environment, level of congestion or services, which allows the system to accommodate terminals efficiently.

The present invention is applicable to a communication terminal apparatus and radio communication method used in a digital radio communication system.

## Claims

1. A radio communication system comprising:
an FDD base station (202) that manages a macro cell (101) in which communication is performed using an FDD system;
a TDD base station (205) that manages a micro cell (102) in which communication is performed using a TDD system, said micro cell having an area that overlaps with said macro cell; and
a communication terminal (201) that is capable of communicating with both said FDD base station and said TDD base station,
**characterized in that**
said communication terminal is adapted to monitor in the overlapping area control signals from both said FDD base station and said TDD base station and transmit to said FDD base station a connection request to said TDD base station with the monitoring result, said FDD base station determining to which one of said FDD base station and said TDD base station said communication terminal is allowed to connect;
said FDD base station is adapted to determine to which one of said FDD base station and said TDD base station said communication terminal is allowed to connect based on said connection request and said monitoring result and additionally based on a condition of communication monitored by said FDD base station, and transmit a determination result to said communication terminal; and
said communication terminal is adapted to perform communication with one of said FDD base station and said TDD base station in accordance with said determination result.

2. The radio communication system of claim 1, the FDD base station comprising:
receiving means (402) adapted to receive the connection request and the monitoring result transmitted from said communication terminal;
determining means (405) adapted to determine to which one of said FDD base station and said TDD base station said communication terminal is allowed to connect based on said connection request and said monitoring result and additionally based on the condition of communication monitored by said FDD base station; and
transmitting means (402) adapted to transmit the determination result to said communication terminal.

3. The radio communication system of claim 1 or 2, the communication terminal comprising:
monitoring means (305) adapted to monitor in the overlapping area control signals from both said FDD base station and said TDD base station;
transmitting means (301, 302) adapted to transmit to said FDD base station, a connection request to said TDD base station with the monitoring result; and
communication means adapted to communicate with one of said FDD base station and said TDD base station in accordance with the determination result transmitted from said FDD base station, said determination result indicating to which one of said FDD base station and said TDD base station said communication terminal is allowed to connect.

4. A communication terminal apparatus for use in a radio communication system including an FDD base station that manages a macro cell in which communication is performed using an FDD system and a TDD base station that manages a micro cell in which communication is performed using a TDD system, said micro cell having an area that overlaps with said macro cell, **characterised by** comprising:
monitoring means (305) adapted to monitor in the overlapping area control signals from both said FDD base station and said TDD base station;
transmitting means (301, 302) adapted to transmit to said FDD base station, a connection request to said TDD base station with the monitoring result; and
communication means adapted to communicate with one of said FDD base station and said TDD base station in accordance with the determination result transmitted from said FDD base station, said determination result indicating to which one of said FDD base station and said TDD base station said communication terminal is allowed to connect.

5. A radio communication method in a radio communication system including an FDD base station, a TDD base station, and a communication terminal, the FDD base station managing a macro cell in which communication is performed using an FDD system, the TDD base station managing a micro cell in which communication is performed using a TDD system, said micro cell having an area that overlaps with said macro cell, and the communication terminal being capable of communicating with both said FDD base station and said TDD base station;
**characterized in that**
said communication terminal is adapted to monitor in the overlapping area control signals from both said FDD base station and said TDD base station and transmit to said FDD base station a connection request to said TDD base station with the monitoring result, said FDD base station determining to which one of said FDD base station and said TDD base station said communication terminal is allowed to connect;
said FDD base station is adapted to determine to which one of said FDD base station and said TDD base station said communication terminal is allowed to connect based on said connection request and said monitoring result and additionally based on a condition of communication monitored by said FDD base station and transmits a determination result to said communication terminal; and
said communication terminal, is adapted to perform communication with one of said FDD base station and said TDDbase station in accordance with said determination result.

## Patentansprüche

1. Funkkommunikationssystem, das umfasst:
eine FDD-Basisstation (202), die eine Makrozelle (101) verwaltet, in der Kommunikation unter Verwendung eines FDD-Systems durchgeführt wird;
eine TDD-Basisstation (205), die eine Mikrozelle (102) verwaltet, in der Kommunikation unter Verwendung eines TDD-Systems durchgeführt wird, wobei die Mikrozelle ein Gebiet aufweist, dass sich mit der Makrozelle überschneidet, und
ein Kommunikationsendgerät (201), das imstande ist, sowohl mit der FDD-Basisstation als auch der TDD-Basisstation zu kommunizieren,
**dadurch gekennzeichnet, dass**
das Kommunikationsendgerät so ausgebildet ist, dass es in dem sich überschneidenden Gebiet Steuersignale sowohl von der FDD-Basisstation als auch von der TDD-Basisstation überwacht und an die FDD-Basisstation eine Verbindungsanforderung mit der TDD-Basisstation mit dem Überwachungser-gebnis sendet, wobei die FDD-Basisstation bestimmt, mit welcher von der FDD-Basisstation oder der TDD-Basisstation das Kommunikationsendgerät zu verbinden erlaubt ist;
die FDD-Basisstation so ausgebildet ist, dass sie basierend auf der Verbindungsanforderung und dem Überwachungsergebnis und außerdem basierend auf einer durch die FDD-Basisstation überwachten Kommunikationsbedingung bestimmt, mit welcher von der FDD-Basisstation oder der TDD-Basis-station das Kommunikationsendgerät zu verbinden erlaubt ist, und ein Bestimmungsergeb-nis an das Kommunikationsendgerät sendet, und
das Kommunikationsendgerät so ausgebildet ist, dass es die Kommunikation mit der FDD-Basisstation oder der TDD-Basisstation entsprechend dem Bestimmungsergebnis durchführt.

2. Funkkommunikationssystem nach Anspruch 1, wobei die FDD-Basisstation umfasst:
eine Empfangseinrichtung (402), die so ausgebildet ist, dass sie die Verbindungsanforderung und das Überwachungsergebnis, die von dem Kommunikationsendgerät gesendet werden, empfängt;
eine Bestimmungseinrichtung (405), die so ausgebildet ist, dass sie basierend auf der Verbindungsanforderung und dem Überwachungsergebnis und außerdem basierend auf der durch die FDD-Basisstation über-wachten Kommunikationsbedingung bestimmt, mit welcher von der FDD-Basisstation oder der TDD-Basisstation das Kommunikationsendgerät zu verbinden erlaubt ist, und
eine Sendeeinrichtung (402), die so ausgebildet ist, dass sie das Bestimmungsergebnis an das Kommunikationsendgerät sendet.

3. Funkkommunikationssystem nach Anspruch 1 oder 2, wobei das Kommunikationsendgerät umfasst:
eine Überwachungseinrichtung (305), die so ausgebildet ist, dass sie in dem sich überschneidenden Gebiet Steuersignale sowohl von der FDD-Basisstation als auch von der TDD-Basisstation überwacht;
eine Sendeeinrichtung (301, 302), die so ausgebildet ist, dass sie an die FDD-Basisstation eine Verbindungsanforderung mit der TDD-Basisstation mit dem Überwachungsergebnis sendet, und
eine Kommunikationseinrichtung, die so ausgebildet ist, dass sie mit der FDD-Basisstation oder der TDD-Basisstation entsprechend dem von der FDD-Basisstation gesendeten Bestimmungsergebnis kommuniziert, wobei das Bestimmungsergebnis angibt, mit welcher von der FDD-Basisstation oder der TDD-Basisstation das Kommunikationsendgerät zu verbinden erlaubt ist.

4. Kommunikationsendgerät-Vorrichtung zur Verwendung in einem Funkkommunikationssystem, das eine FDD-Basisstation, die eine Makrozelle verwaltet, in der die Kommunikation unter Verwendung eines FDD-System durchgeführt wird, und eine TDD-Basisstation, die eine Mikrozelle verwaltet, umfasst in der die Kommunikation unter Verwendung eines TDD-Systems durchgeführt wird, wobei die Mikrozelle ein Gebiet aufweist, das sich mit der Makrozelle überschneidet, **dadurch gekennzeichnet, dass** sie umfasst:
eine Überwachungseinrichtung (305), die so ausgebildet ist, dass sie in dem sich überschneidenden Gebiet Steuersignale sowohl von der FDD-Basisstation als auch von der TDD-Basisstation überwacht;
eine Sendeeinrichtung (301, 302), die so ausgebildet ist, dass sie an die FDD-Basisstation eine Verbindungsanforderung mit der TDD-Basisstation mit dem Überwachungsergebnis sendet, und
eine Kommunikationseinrichtung, die so ausgebildet ist, dass sie mit der FDD-Basisstation oder der TDD-Basisstation entsprechend dem von der FDD-Basisstation gesendeten Bestimmungsergebnis kommuniziert, wobei das Bestimmungsergebnis angibt, mit welcher von der FDD-Basisstation oder der TDD-Basisstation das Kommunikationsendgerät zu verbinden erlaubt ist.

5. Funkkommunikationsverfahren in einem Funkkommunikationssystem, das eine FDD-Basisstation, eine TDD-Basisstation und ein Kommunikationsendgerät umfasst, wobei die FDD-Basisstation eine Makrozelle verwaltet, in der die Kommunikation unter Verwendung eines FDD-Systems durchgeführt wird, und die TDD-Basisstation eine Mikrozelle verwaltet, in der die Kommunikation unter Verwendung eines TDD-Systems durchgeführt wird, wobei die Mikrozelle ein Gebiet aufweist, das sich mit der Makrozelle überschneidet, und das Kommunikationsendgerät imstande ist, sowohl mit der FDD-Basisstation als auch der TDD-Basisstation zu kommunizieren,
**dadurch gekennzeichnet, dass**
das Kommunikationsendgerät so ausgebildet ist, dass es in dem sich überschneidenden Gebiet Steuersignale sowohl von der FDD-Basisstation als auch von der TDD-Basisstation überwacht und an die FDD-Basisstation eine Verbindungsanforderung mit der TDD-Basisstation mit dem Überwachungser-gebnis sendet, wobei die FDD-Basisstation bestimmt, mit welcher von der FDD-Basisstation oder der TDD-Basisstation das Kommunikationsendgerät zu verbinden erlaubt ist;
die FDD-Basisstation so ausgebildet ist, dass sie basierend auf der Verbindungsanforderung und dem Überwachungsergebnis und außerdem basierend auf einer durch die FDD-Basisstation überwachten Kommunikationsbedingung bestimmt, mit welcher von der FDD-Basisstation oder der TDD-Basis-station das Kommunikationsendgerät zu verbinden erlaubt ist, und ein Bestimmungsergeb-nis an das Kommunikationsendgerät sendet, und
das Kommunikationsendgerät so ausgebildet ist, dass es die Kommunikation mit der FDD-Basisstation oder der TDD-Basisstation entsprechend dem Bestimmungsergebnis durchführt.

## Revendications

1. Un système de radiocommunication comprenant :
une station de base DRF (202) qui gère une macrocellule (101) dans laquelle la communication est effectuée à l'aide d'un système duplex à répartition en fréquence DRF ;
une station de base DRT (205) qui gère une microcellule (102) dans laquelle la communication est effectuée à l'aide d'un système duplex à répartition dans le temps DRT, ladite microcellule ayant une zone qui chevauche ladite macrocellule ; et
un terminal de communication (201) qui est capable de communiquer tant avec ladite station de base DRF qu'avec ladite station de base DRT
**caractérisé en ce que**
ledit terminal de communication est adapté à surveiller dans la zone de chevauchement les signaux de commande provenant tant de ladite station de base DRF que de ladite station de base DRT et transmettre à ladite station de base DRF une demande de connexion à ladite station de base DRT avec le résultat de la surveillance, ladite station de base DRF déterminant à laquelle de ladite station de base DRF et de ladite station de base DRT ledit terminal de communication est autorisé à se connecter ;
ladite station de base DRF est adaptée à déterminer à laquelle de ladite station de base DRF et de ladite station de base DRT ledit terminal de communication est autorisé à se connecter en fonction de ladite demande de communication et dudit résultat de surveillance et, en plus, en fonction d'une condition de communication surveillée par ladite station de base DRF, et transmettre un résultat de détermination audit terminal de communication ; et
ledit terminal de communication est adapté à effectuer la communication avec l'une de ladite station de base DRF et de ladite station de base DRT en fonction dudit résultat de détermination.

2. Le système de radiocommunication selon la revendication 1, la station de base DRF comprenant :
un moyen de réception (402) adapté à recevoir la demande de connexion et le résultat de surveillance transmis depuis ledit terminal de communication ;
un moyen de détermination (405) adapté à déterminer à laquelle de ladite station de base DRF et de ladite station de base DRT ledit terminal de communication est autorisé à se connecter en fonction de ladite demande de connexion et dudit résultat de surveillance et, en plus, en fonction de la condition de communication surveillée par ladite station de base DRF ; et
un moyen d'émission (402) adapté à transmettre le résultat de détermination audit terminal de communication.

3. Le système de radiocommunication selon la revendication 1 ou 2, le terminal de communication comprenant :
un moyen de surveillance (305) adapté à surveiller dans la zone de chevauchement les signaux de commandes provenant tant de ladite station de base DRF que de la station de base DRT ;
un moyen d'émission (301, 302) adapté à transmettre à ladite station de base DRF une demande de connexion à ladite station de base DRT avec le résultat de détermination ; et
un moyen de communication adapté à communiquer avec l'une de ladite station de base DRF et de ladite station de base DRT en fonction du résultat de détermination émis depuis ladite station de base DRF, ledit résultat de détermination indiquant à laquelle de ladite station de base DRF et de ladite station de base DRT ledit terminal de communication est autorisé à se connecter.

4. Un terminal de communication pour une utilisation dans un système de radiocommunication comprenant une station de base DRF qui gère une macrocellule dans laquelle la communication est effectuée à l'aide d'un système duplex à répartition en fréquence DRF, et une station de base DRT qui gère une microcellule dans laquelle la communication est effectuée à l'aide d'un système duplex à répartition dans le temps DRT, ladite microcellule ayant une zone qui chevauche ladite macrocellule,
**caractérisé en ce qu'**il comprend :
un moyen de surveillance (305) adapté à surveiller dans la zone de chevauchement les signaux de commandes provenant tant de ladite station de base DRF que de la station de base DRT ;
un moyen d'émission (301, 302) adapté à transmettre à ladite station de base DRF une demande de connexion à ladite station de base DRT avec le résultat de détermination ; et
un moyen de communication adapté à communiquer avec l'une de ladite station de base DRF et de ladite station de base DRT en fonction du résultat de détermination émis depuis ladite-station de base DRF, ledit résultat de détermination indiquant à laquelle de ladite station de base DRF et de ladite station de base DRT ledit terminal de communication est autorisé à se connecter.

5. Un procédé de radiocommunication dans un système de radiocommunication comprenant une station de base DRF, une station de base DRT, et un terminal de communication, la station de base DRF gérant une macrocellule dans laquelle la communication est effectuée à l'aide d'un système duplex à répartition en fréquence DRF, la station de base DRT gérant une microcellule dans laquelle la communication est effectuée à l'aide d'un système duplex à répartition dans le temps DRT, ladite microcellule ayant une zone qui chevauche ladite macrocellule, et le terminal de communication étant capable de communiquer tant avec ladite station de base DRF qu'avec ladite station de base DRT ;
**caractérisé en ce que**
ledit terminal de communication est adapté à surveiller dans la zone de chevauchement les signaux de commande provenant tant de ladite station de base DRF que de ladite station de base DRT et transmettre à ladite station de base DRF une demande de connexion à ladite station de base DRT avec le résultat de la surveillance, ladite station de base DRF déterminant à laquelle de ladite station de base DRF et de ladite station de base DRT ledit terminal de communication est autorisé à se connecter ;
ladite station de base DRF est adaptée à déterminer à laquelle de ladite station de base DRF et de ladite station de base DRT ledit terminal de communication est autorisé à se connecter en fonction de ladite demande de communication et dudit résultat de surveillance et, en plus, en fonction d'une condition de communication surveillée par ladite station de base DRF, et transmet un résultat de détermination audit terminal de communication ; et
ledit terminal de communication est adapté à effectuer la communication avec l'une de ladite station de base DRF et de ladite station de base DRT en fonction dudit résultat de détermination.
